Europäisches Patentamt

European Patent Office

Office européen des brevets

(11) Publication number: **0 469 746 A2**

# EUROPEAN PATENT APPLICATION

(21) Application number: **91306466.3**

(22) Date of filing: **16.07.91**

(51) Int. Cl.5: **H04N 5/76**

(30) Priority: **28.07.90 JP 199835/90**

(43) Date of publication of application:
**05.02.92 Bulletin 92/06**

(84) Designated Contracting States:
**DE FR GB**

(71) Applicant: **SONY CORPORATION**
**7-35 Kitashinagawa 6-Chome Shinagawa-ku**
**Tokyo 141(JP)**

(72) Inventor: **Kimura, Hisashi, c/o Patents**
**Division**
**Sony Corporation 6-7-35 Kitashinagawa**
**Shinagawa-ku Tokyo 141(JP)**

(74) Representative: **Thomas, Christopher Hugo et**
**al**
**D Young & Co 10 Staple Inn**
**London WC1V 7RD(GB)**

(54) **Video camera apparatus.**

(57) In a video camera apparatus (1) in which an imaging device (8) converts a light image derived by a lens 93) into an electric signal, picture information and/or sound information, which has been previously recorded in an external memory (6), is combined with the video signal and/or the sound signal of said electric signal to enable a variety of picture information items and/or sound information items to be combined therewith by interchanging the external memory means (6).

FIG.2

This invention relates to video camera apparatus, and more particularly, but not exclusively, to a video camera with an integral video tape recorder (VTR).

A video camera with an integral VTR is known in which an illustration or characters such as a title or explanatory wording can be combined with a picture image, and the resulting composite image can be recorded.

Where title information is to be combined with the picture which is being imaged, the title information, which has been previously prepared on paper or the like, is imaged by the video camera with the integral VTR so as to be stored in a picture memory therein. Then, when the actual picture imaging is subsequently performed, the desired title information stored in the picture memory is read out and combined with the image which is being imaged. However, the complete operation is somewhat complex, and becomes even more so if sound, such as background music, is to be included in addition to the title information.

According to the present invention there is provided a video camera apparatus comprising:
an imaging device for converting a light image into an electric signal;
an imaging lens for forming said light image;
a video signal processing circuit for processing said signal; and
an input terminal connectable to an external data storage means.

An embodiment of the present invention can thus provide a video camera apparatus which is capable of significantly improving the operational facility for a user when combining desired picture information or sound information with an image which is being imaged.

An embodiment of the present invention may comprise a video camera apparatus for converting image information, which is obtainable by imaging, and/or picked-up audio information, into a video signal and/or an audio signal, the apparatus including: external memory means in which predetermined picture information and/or sound information has been previously recorded; external memory connection means, to which the external memory means is connected, for supplying the picture information and/or the sound information recorded in the external memory means; information selection means for selecting the picture information and/or the sound information supplied via the external memory connection means; and combining means for combining the picture information and/or the sound information selected by the information selection means with the video signal and/or the audio signal.

The picture information and/or the sound information, which has been previously recorded in the external memory means, is combined with the video signal and/or the audio signal obtainable as the result of the imaging and/or sound receiving operation. As a result, a variety of image information and/or audio information can be combined simply by interchanging the external memory means. Consequently, the operational facility for a user can be significantly improved.

The invention will now be described by way of example with reference to the accompanying drawings, throughout which like parts are referred to by like references, and in which:

Figure 1 is a schematic view which illustrates an embodiment of video camera apparatus according to the present invention;

Figure 2 is a block diagram of a circuit therein; and

Figures 3A to 3C illustrate a title information selecting operation.

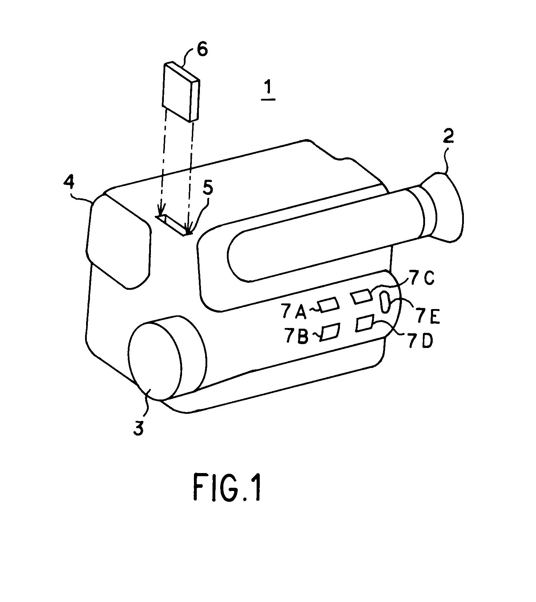

Referring to Figure 1, there is shown an embodiment of video camera apparatus 1 comprising a video camera with an integral VTR, which is arranged such that image information derived by an imaging lens 3 while the user looks in an electronic viewfinder 2 is converted into a video signal, and audio information received by a microphone 4 is converted into an audio signal, so that the image information and the audio information can be respectively recorded on a video cassette tape loaded into the apparatus 1.

A card memory insertion slot 5 of rectangular shape is formed in the top surface of the apparatus 1, and a card memory connection terminal 5A is provided within the slot 5. In use, a card memory 6 which is formed by a mask read only memory (ROM) and in which title information, such as picture data and sound data relating to annual events, have been previously recorded is inserted into the slot 5. A title control portion 7 disposed on a side surface of the apparatus 1 can be operated so that this title information can be read and combined with a video signal and an audio signal picked up by the video camera, so as to be respectively recorded on a video cassette tape.

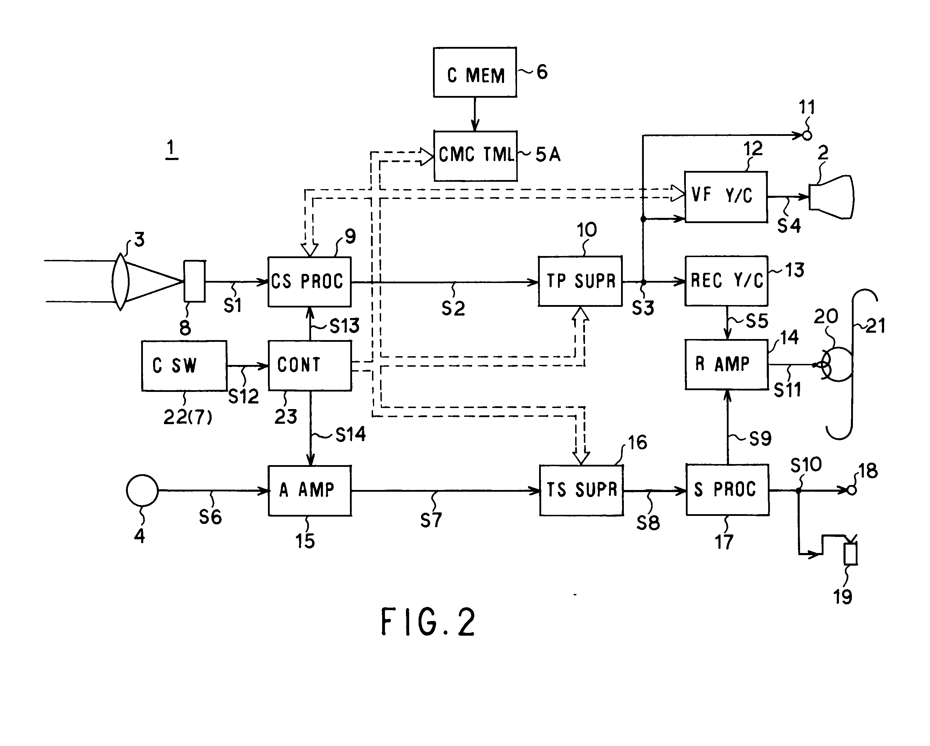

Referring to Figure 2, image information imaged by the lens 3 is converted into a CCD output sinal S1 by a charge coupled device (CCD) 8 before it is received by a camera signal processing circuit 9.

The camera signal processing circuit 9 subjects the CCD output signal S1 to required camera signal processes such as white balance processing and a synchronizing process, so as to supply a video signal S2 to a title picture superimposing circuit 10, so that a superimposed video signal S3 is obtained which is then transmitted to a video output terminal 11, to a viewfinder video Y/C separation circuit 12, and to a recording Y/C separation circuit 13.

An external VTR is, if necessary, connected to the video output terminal 11, so that the superimposed video signal S3 can be transmitted to and recorded by the external VTR.

The viewfinder Y/C separation circuit 12 subjects the superimposed video signal S3 to a separating Y/C signal process, so that a video output signal S4 is obtained, and is transmitted to the viewfinder 2 which comprises, for example, a small black-and-white cathode ray tube. Thus, image information, which is being imaged by the lens 3, can be visually confirmed through the viewfinder 2.

Furthermore, the recording Y/C separation circuit 13 subjects the superimposed video signal S3 to a recording Y/C signal process such as a chroma-low-frequency conversion process, so that a video recording signal S5 is obtained, which is then transmitted to a recording amplifier circuit 14.

Sound information included in the image to be imaged is received by the microphone 4 before it is converted into an audio signal S6. Then, it is amplified by an audio amplifier circuit 15 so as to be supplied, as an audio signal S7, to a title sound superimposing circuit 16. As a result, a superimposed sound signal S8 is obtained, the superimposed sound signal S8 being transmitted to a sound processing circuit 17.

The sound processing circuit 17 processes a sound recording signal S9 using the superimposed sound signal S8 so as to transmit it to the recording amplifier circuit 14, and processes a sound signal S10 which is then transmitted to a sound output terminal 18 to which the external VTR is, if necessary, connected, and to an earphone terminal 19 to which a monitoring earphone for use in the video recording mode is connected.

As a result, the recording amplifier circuit 14 combines the supplied video recording signal S5 and the sound recording signal S9 in, for example, a time division manner so that a recording signal S11 is obtained which is then transmitted to a magnetic head 20 for recording on magnetic tape 21.

In the apparatus 1, a control signal S12 corresponding to the operation performed by a user by using a control switch 22 including the title control portion 7 is supplied to a control circuit 23 comprising a microcomputer, a memory for recording picture data and sound data of the title information, and a digital/analogue conversion circuit for converting this picture data and sound data into an analogue signal.

As a result, the control circuit 23 analyzes the control signal S12 thus-supplied so as to transmit a video control signal S13 and an audio control signal S14 to the camera signal processing circuit 9 and the audio amplifier circuit 15. Thus the overall operation of the apparatus 1 can be controlled by the user.

In the apparatus 1 the card memory connection terminal 5A is, as designated by dashed lines shown in Figure 2, connected to the camera signal processing circuit 9, the title picture superimposing circuit 10, the viewfinder Y/C separation circuit 12, and the title sound superimposing circuit 16.

A title button 7A, a selection button 7B, a memory button 7C, a sound button 7D and a superimpose button 7E are disposed in the title control portion 7 of the control switch 22.

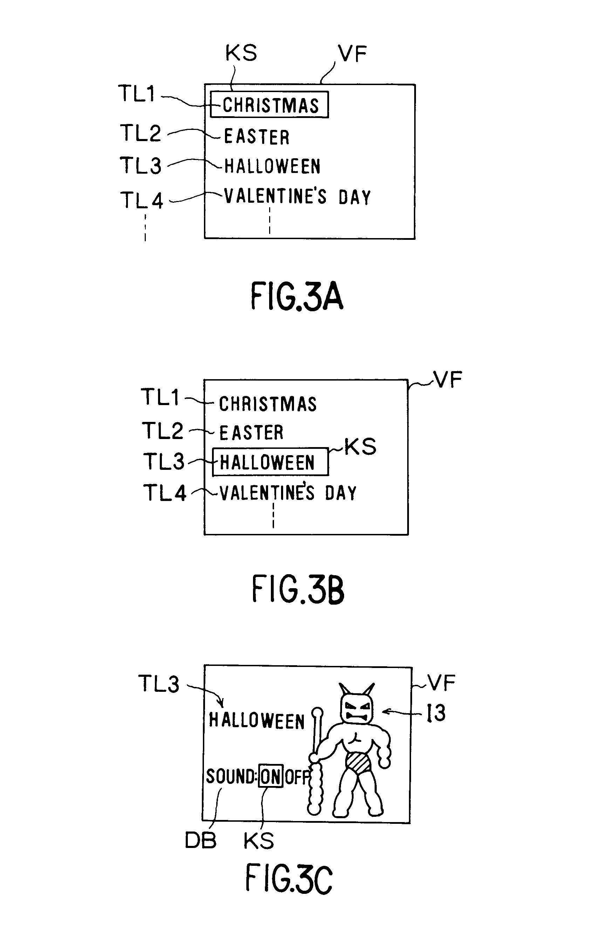

As a result, when a user loads the card memory 6 in the slot 5 so that it is connected to the card memory connection terminal 5A, and depresses the title button 7A, the menu of the title information of annual events recorded in the card memory 6 is read out so as to be supplied to the viewfinder Y/C separation circuit 12. Consequently, as shown in Figure 3A, a menu picture composed of title information TL1, TL2, TL3, TL4, ..., is displayed in a frame VF of the viewfinder 2.

When the user successively depresses the selection button 7B while visually confirming the frame VF of the viewfinder 2, a cursor KS surrounding the title information TL1, TL2, TL3, TL4, ..., is sequentially shifted downward.

As a result, where the user wants the title "halloween" the shifting of the cursor KS is completed at the position of the title information TL3 as shown in Figure 3B before the memory button 7C is operated. As a result, the picture data of the title information TL3 is displayed together with title characters.

At this time, sound selection data DB are displayed so "sound on" and "sound off" are sequentially alternately surrounded by the cursor KS by operating the sound button 7D. As a result, whether or not sound data such as background music or the like, which correspond to the title information, are recorded can be selected.

The picture data and sound data of the title information thus selected and stored in the control circuit 23 are read from the memory at which the superimpose button 7E is depressed by the user to a moment at which the superimposed button 7E is again depressed, so that they are digital/analogue-converted. A picture signal and a sound signal obtained from these conversions are respectively transmitted to the title picture superimposing circuit 10 and the title sound superimposing circuit 16.

As a result, the video signal S2, the sound signal S7, the picture signal denoting the title information and the corresponding sound signal, which are respectively supplied, are combined with each other in the title picture superimposing circuit 10 and the title sound superimposing circuit 16.

If the tape 21 has been subjected to the picture-recording and the sound-recording processes at this time, the picture signal and the sound signal of the title information are combined with the image information imaged by the lens 3 and the audio information received by the microphone 4 so as to be recorded.

The memory card 6 thus saves the labour of processing title information and post-recording it so that the picture information and the sound information of a title can be combined with a simple operation. Consequently, a video camera with integral VTR, which can be easily operated by a user, can be realized.

In the above embodiment, title information about annual events is recorded in the card memory. However, a variety of title information such as ceremonial occasions may be recorded in the card memory for selective use at the time of the imaging operation. Moreover, a variety of other picture and sound information items such as explanatory sentences, which are desired to be combined with the image and audio information items to be imaged, may additionally or alternatively be recorded in the card memory.

As described above, title information about annual events is selected using the selection button. As an alternative to this, title information about the annual events may be selected in accordance with included calendar information times.

The external memory need not be a card comprising a mask ROM. Thus, the external memory may be in the form of a card comprising a magnetic memory or an optical memory, and the shape is not limited to the form of a card.

It is not essential that the picture information and the sound information recorded in the external memory are combined with each other in accordance with the operation performed by a user, as one or the other only may be selected.

The present invention can also be applied to a variety of imaging devices such as television cameras and electronic still cameras.

**Claims**

1. A video camera apparatus (1) comprising:
   an imaging device (8) for converting a light image into an electric signal;
   an imaging lens (3) for forming said light image;
   a video signal processing circuit (9) for processing said signal; and
   an input terminal (5A) connectable to an external data storage means (6).

2. Apparatus (1) according to claim 1 further comprising a recording means (20, 21) for recording said signal of said imaging device (8) and a signal received through said information input terminal (5A).

3. Apparatus (1) according to claim 1 or claim 2 wherein said information input terminal (5A) associated with means (5) in said apparatus (1) for receiving a card shaped memory means (6) forming said storage memory (6).

4. Apparatus (1) according to claim 1, claim 2 or claim 3 wherein said storage means (6) stores image data.

5. Apparatus (1) according to claim 4 wherein said storage means (6) stores sound data.

6. Apparatus (1) according to any one of the preceding claims further comprising a control means (23) for selecting specific data from said storage means (6), and a switch means (3) for supplying selecting information to said control means (23).

7. Apparatus (1) according to claim 3 wherein said card shaped memory means (6) stores a plurality of event titles.

FIG.1

FIG.2

EP 0 469 746 A2

KS     VF

TL1 ┌─ CHRISTMAS
TL2 ── EASTER
TL3 ── HALLOWEEN
TL4 ── VALENTINE'S DAY

**FIG.3A**

VF

TL1 ── CHRISTMAS
TL2 ── EASTER
TL3 ── HALLOWEEN ── KS
TL4 ── VALENTINE'S DAY

**FIG.3B**

TL3     VF

HALLOWEEN     I3

SOUND: ON OFF

DB    KS

**FIG.3C**